(19) Europäisches Patentamt
European Patent Office
Office européen des brevets

(11) EP 2 900 599 B1

# (12) FASCICULE DE BREVET EUROPEEN

(45) Date de publication et mention de la délivrance du brevet:
**24.08.2016 Bulletin 2016/34**

(21) Numéro de dépôt: **13782726.7**

(22) Date de dépôt: **20.09.2013**

(51) Int Cl.:
***C01B 33/38*** *(2006.01)* ***C09C 1/28*** *(2006.01)*

(86) Numéro de dépôt international:
**PCT/FR2013/052194**

(87) Numéro de publication internationale:
**WO 2014/049250 (03.04.2014 Gazette 2014/14)**

## (54) PROCÉDÉ DE PRÉPARATION D'UNE COMPOSITION COMPRENANT DES PARTICULES MINÉRALES SILICATÉES COLORÉES ET COMPOSITION COMPRENANT DES PARTICULES MINÉRALES SILICATÉES COLORÉES

VERFAHREN ZUR HERSTELLUNG EINER ZUSAMMENSETZUNG MIT FARBIGEN SILIKATMINERALPARTIKELN UND EINER ZUSAMMENSETZUNG MIT FARBIGEN SILIKATMINERALPARTIKELN

METHOD FOR PREPARING A COMPOSITION COMPRISING COLOURED SILICATE MINERAL PARTICLES AND A COMPOSITION COMPRISING COLOURED SILICATE MINERAL PARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.09.2012 FR 1259231**

(43) Date de publication de la demande:
**05.08.2015 Bulletin 2015/32**

(73) Titulaires:
- **Centre National de la Recherche Scientifique (CNRS)**
  **75794 Paris Cedex 16 (FR)**
- **Université Paul Sabatier Toulouse III**
  **31400 Toulouse (FR)**

(72) Inventeurs:
- **MARTIN, François**
  **F-31570 Sainte Foy d'Aigrefeuille (FR)**
- **GARDES, Emmanuel**
  **F-14000 Caen (FR)**
- **MICOUD, Pierre**
  **F-31390 Peyssies (FR)**
- **LE ROUX, Christophe**
  **F-31290 Avignonet-Lauragais (FR)**

(74) Mandataire: **Cabinet BARRE LAFORGUE & associés**
**35, rue Lancefoc**
**31000 Toulouse (FR)**

(56) Documents cités:
**WO-A1-00/63299** **WO-A1-2012/085239**
**WO-A2-2008/009800**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 900 599 B1

## Description

L'invention concerne un procédé de préparation d'une composition comprenant des particules minérales silicatées colorées ainsi qu'une composition comprenant des particules minérales silicatées colorées, ainsi obtenue.

Les phyllosilicates sont constitués par un empilement irrégulier de feuillets élémentaires de structure cristalline, dont le nombre varie de quelques unités à quelques dizaines d'unités. Parmi les phyllosilicates (silicates lamellaires), le groupe comprenant notamment le talc, le mica et la montmorillonite est caractérisé par le fait que chaque feuillet élémentaire est constitué par l'association de deux couches de tétraèdres situées de part et d'autre d'une couche d'octaèdres. Ce groupe correspond aux phyllosilicates 2:1, dont font notamment partie les smectites. Au vu de leur structure, les phyllosilicates 2:1 sont également qualifiées de type T.O.T. (tétraèdre-octaèdre-tétraèdre).

La couche octaédrique des phyllosilicates 2:1 est formée de deux plans d'ions $O^{2-}$ et $OH^-$ (dans la proportion molaire $O^{2-}/OH^-$ de 2/1). De part et d'autre de cette couche médiane viennent s'agencer des réseaux bidimensionnels de tétraèdres dont un des sommets est occupé par un oxygène de la couche octaédrique, tandis que les trois autres le sont par des oxygènes sensiblement coplanaires. Dans les smectites naturelles, par exemple, les sites tétraédriques sont généralement occupés par des ions $Si^{4+}$ ou $A1^{3+}$, et les sites octaédriques le sont le plus souvent par les cations $Mg^{2+}$, $Fe^{2+}$, $A1^{3+}$ et/ou $Fe^{3+}$. Une faible proportion des sites octaédriques et/ou tétraédriques des smectites n'est pas occupée et est responsable du déficit cationique du réseau cristallin formant les feuillets élémentaires.

Certains phyllosilicates, tels que les smectites, se caractérisent également par la présence, entre les feuillets élémentaires, d'espaces interfoliaires qui renferment de l'eau et des cations et qui forment une phase gonflante du minéral. Les smectites sont donc qualifiées de type T.O.T. gonflant. Dans les smectites naturelles, ces cations interfoliaires sont généralement des ions $Mg^{2+}$, $Ca^{2+}$ et/ou $Na^+$.

Les particules minérales phyllosilicatées, telles que le talc, sont utilisées sous forme de fines particules dans de nombreux secteurs industriels, par exemple : le caoutchouc, les thermoplastiques, le papier, la peinture, la pharmacie, la cosmétique, ou encore les produits phytosanitaires. Elles sont utilisées à titre de charge inerte (pour leur stabilité chimique ou encore pour la dilution de composés actifs de coût supérieur) ou de charges fonctionnelles (par exemple pour renforcer les propriétés mécaniques de certains matériaux).

WO 2008/009800 propose un procédé de préparation de compositions d'interstratifié phyllogermanosilicate 2:1 phyllogermanosilicate gonflant (T.O.T.-T.O.T. gonflant) qui peuvent être utilisées notamment comme précurseur pour la préparation de compositions talqueuses, en particulier de talc synthétique. Ces compositions d'interstratifié T.O.T.-T.O.T. gonflant sont synthétisées par précipitation d'un gel silico/germano-métallique suivie d'un traitement hydrothermal de ce gel à une température de 150° à 300°C. Les paramètres de mise en oeuvre du procédé de préparation de ces compositions permettent de contrôler une partie des caractéristiques structurales des particules minérales synthétisées, en particulier la cristallinité et le ratio phase minérale gonflante/phase minérale non gonflante.

Les particules d'interstratifié T.O.T.-T.O.T. gonflant synthétisées décrites dans WO 2008/009800 peuvent présenter différentes couleurs en fonction du sel de métal utilisé dans le gel silico/germano-métallique de départ.

Cependant, l'obtention de particules d'interstratifié T.O.T.-T.O.T. gonflant selon WO 2008/009800 nécessite de reproduire entièrement le protocole de synthèse de ces particules pour chaque couleur voulue, et de changer les paramètres de synthèse pour chaque produit de couleur différente voulu. En outre, une fois les particules d'interstratifié T.O.T.-T.O.T. gonflant synthétisées, leur couleur n'est pas modifiable, la couleur étant déterminée par le choix des réactifs utilisés lors de la première étape de précipitation du gel silico/germano-métallique. D'autre part, le choix des couleurs qu'il est ainsi possible d'obtenir selon WO 2008/009800 reste limité, celui-ci étant limité par les sels de métaux divalents de départ utilisables.

Par ailleurs, si certain talcs naturels (stéatites) présentent des couleurs variées telles que rose, gris ou vert, lorsqu'ils sont en forme de blocs tels qu'obtenus directement après extraction, leur broyage en fines particules conduit irrémédiablement à l'obtention de poudres de couleur blanche à grisâtre, la couleur du talc naturel étant uniquement due à l'agencement particulier des particules de talc les unes par rapport aux autres. Le broyage de tels talcs naturels conduit donc irrémédiablement à une perte de la coloration éventuellement rosée ou verdâtre naturelle initiale du talc.

WO 00/63299 propose un procédé de fixation de molécules organiques sur des particules minérales de talc, permettant en particulier de colorer ces dernières. Ce procédé consiste à solubiliser les molécules organiques dans un milieu réducteur, à ajouter audit milieu la proportion adéquate de talc, à précipiter les molécules organiques par oxydation de celles-ci dans ledit milieu, et à séparer la phase solide par filtration et séchage.

L'invention vise à proposer un procédé permettant de préparer, de façon simple et rapide, une composition comprenant des particules minérales silicatées, les particules présentant des propriétés de coloration.

L'invention vise également à proposer un procédé de préparation d'une composition comprenant des particules minérales phyllosilicatées, les particules présentant des propriétés de coloration non seulement modulables selon la nuance et l'intensité de la couleur voulues mais également durables et stables dans le temps, à partir d'une composition comprenant des particules minérales phyllosilicatées déjà synthétisées.

Une telle composition pouvant faire office à la fois de charge minérale fonctionnelle et de pigment, peut présenter

un intérêt majeur dans de nombreux domaines, tels que celui des cosmétiques ou encore des charges minérales pour les peintures.

L'invention vise à proposer un tel procédé dont la mise en oeuvre est simple et rapide, et est compatible avec les contraintes d'une exploitation industrielle.

L'invention a aussi pour objectif de proposer un procédé permettant de préparer une grande diversité chimique de compositions comprenant des particules minérales de structure et de propriétés similaires à celles des talcs naturels ou des smectites naturelles, et dont les propriétés de coloration peuvent être contrôlées et modifiées aisément.

Pour ce faire, l'invention concerne un procédé de préparation d'une composition comprenant des particules minérales silicatées qui présentent des propriétés de coloration dans lequel :

- on choisit une composition, dite composition talqueuse, comprenant des particules minérales phyllosilicatées dans le groupe formé :

  - des particules formées d'un empilement de feuillets élémentaires, et ayant pour formule chimique :

    $$(Si_xGe_{1-x})_4\ M_3O_{10}(OH)_2$$

    - M désignant au moins un métal divalent et ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque *y(i)* représentant un nombre réel de l'intervalle [0 ;1], et tel que $$\sum_{i=1}^{8} y(i) = 1;$$
    - x étant un nombre réel de l'intervalle [0 ; 1],

  - des particules formées d'un empilement de feuillets élémentaires et présentant au moins un espace interfoliaire entre deux feuillets élémentaires consécutifs, et ayant pour formule chimique :

    $$(Si_xGe_{1-x})_4\ M_{3-\varepsilon}\ O_{10}\ (OH)_2,\ (M'^{m+})_{\varepsilon'}.\ nH_2O$$

    - M désignant au moins un métal divalent et ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque *y(i)* représentant un nombre réel de l'intervalle [0 ; 1], et tel que $$\sum_{i=1}^{8} y(i) = 1,$$
    - $M'^{m+}$ désignant au moins un cation, dit cation interfoliaire, présent dans au moins un espace interfoliaire desdits feuillets élémentaires,
    - x étant un nombre réel de l'intervalle [0 ; 1],
    - $\varepsilon$ étant un nombre réel de l'intervalle [0 ; 3 [ et désignant un déficit cationique desdits feuillets élémentaires,
    - $\varepsilon'$ étant un nombre réel de l'intervalle [0 ; 3[ et désignant une proportion de cation(s) interfoliaire(s) $M'^{m+}$présent(s) dans l'(les) espace(s) interfoliaire(s) desdits feuillets élémentaires,
    - m étant un nombre réel de l'intervalle [1 ; 3] et désignant une charge cationique du cation $M'^{m+}$,
    - n étant relatif à un nombre de molécule(s) d'eau associée(s) auxdites particules,

  lesdites particules minérales silicatées présentant une épaisseur inférieure à 100 nm et dont la plus grande dimension est inférieure à 10 $\mu$m,

- on met en contact ladite composition talqueuse avec une solution, dite solution colorante, comprenant des cations, dits cations colorants, d'au moins un élément choisi parmi les métaux de transition, les lanthanides et les actinides.

Les inventeurs ont en effet constaté avec surprise qu'un procédé selon l'invention permet de colorer une composition talqueuse comprenant des particules minérales de formule $(Si_xGe_{1-x})_4\ M_3O_{10}(OH)_2$ ou $(Si_xGe_{1-x})_4\ M_{3-\varepsilon}\ O_{10}\ (OH)_2,\ (M'^{m+})_{\varepsilon'}.\ nH_2O$, de façon simple, rapide, mais néanmoins durable. Ainsi, un simple barbotage de ladite composition

talqueuse dans une solution colorante comprenant des cations d'au moins un élément choisi parmi les métaux de transition, les lanthanides et les actinides, permet d'obtenir une composition comprenant des particules minérales phyllosilicatées colorées. Un tel procédé selon l'invention permet aussi d'obtenir une composition de particules minérales phyllosilicatées présentant des propriétés de coloration désirées à la façon d'un pigment, qui sont aisément ajustables en intensité et en nuance, qui permettent de couvrir toutes les couleurs du spectre visible, et restent ensuite stables dans le temps.

L'effet surprenant lié à cette coloration réside en outre dans le fait qu'elle n'est pas possible avec des particules différentes des particules minérales silicatées selon l'invention et en particulier présentant une épaisseur supérieure à 100 nm et une plus grande dimension supérieure à 10 $\mu$m. Il apparait que la taille des particules minérales silicatées est un facteur primordial pour permettre une telle coloration. Ainsi, les inventeurs ont observé qu'il n'est par exemple pas possible de colorer par un procédé selon l'invention des particules de talc naturel présentant une épaisseur supérieure à 200 nm, l'épaisseur des talcs naturels les plus fins étant comprise entre 200 nm et 300 nm.

Dans tout le texte, on désigne par « épaisseur » des particules minérales silicatées la plus petite dimension desdites particules, soit la dimension desdites particules selon la direction c du réseau cristallin desdites particules minérales silicatées.

Dans tout le texte, on désigne par « plus grande dimension » des particules minérales silicatées, la dimension la plus grande desdites particules dans le plan (a, b) du réseau cristallin desdites particules minérales silicatées.

L'épaisseur et la plus grande dimension des particules minérales silicatées sont mesurées par observation par microscopie électronique à balayage (MEB) ou par microscopie électronique en transmission (MET).

Avantageusement et selon l'invention, lesdites particules présentent une épaisseur comprise entre 1 nm et 100 nm, en particulier entre 5 nm et 50 nm, et dont la plus grande dimension est comprise entre 20 nm et 10 $\mu$m.

La durabilité et le caractère irréversible d'une telle étape de coloration restent à ce jour encore inexpliqués, de même que la facilité avec laquelle cette coloration est rendue-possible.

La couleur d'une composition comprenant des particules minérales phyllosilicatées colorées obtenue par un procédé selon l'invention peut être visible à l'oeil nu sous tout type d'éclairage en lumière visible et/ou à l'aide d'un instrument de détection tel qu'un spectrocolorimètre, les particules minérales phyllosilicatées pouvant absorber une première partie du spectre visible, et en réfléchir une deuxième partie.

En particulier, dans tout le texte, on désigne par « colorée(s) » ou « présentant des propriétés de coloration » des particules présentant une couleur, notamment différente de la couleur blanche initiale d'une composition talqueuse, visible à l'oeil nu sous tout type d'éclairage en lumière visible et/ou à l'aide d'un instrument de détection.

Les particules de formule $(Si_xGe_{1-x})_4\ M_3O_{10}(OH)_2$ forment une phase appelée phase non gonflante. Les particules de formule $(Si_xGe_{1-x})_4\ M_{3-\varepsilon}\ O_{10}\ (OH)_2$, $(M'^{m+})_{\varepsilon'}$. $nH_2O$ forment une phase appelée phase gonflante. Ladite phase non gonflante et ladite phase gonflante sont formées d'un empilement de feuillets élémentaires de type phyllosilicate 2:1.

Ladite phase gonflante se distingué de ladite phase non gonflante en ce qu'elle présente un déficit cationique du métal M et en ce qu'elle comprend des cations interfoliaires $M'^{m+}$ (également appelés « cations compensateurs de charges ») dans l'(les) espace(s) interfoliaire(s) desdits feuillets élémentaires. $\varepsilon$ désigne le déficit cationique se rapportant au métal M des feuillets élémentaires de ladite phase gonflante et $\varepsilon'$ désigne une proportion de cation(s) interfoliaire(s) $M'^{m+}$ présent(s) dans l'(les) espace(s) interfoliaire(s) des feuillets élémentaires de ladite phase gonflante. Ainsi, avantageusement et selon l'invention, $\varepsilon$ est un nombre réel de l'intervalle [0 ; 1]. En outre, avantageusement et selon l'invention, $\varepsilon'$ est un nombre réel de l'intervalle [0 ; 1].

Un procédé selon l'invention permet ainsi d'obtenir une composition comprenant des particules minérales phyllosilicatées colorées.

Un procédé selon l'invention permet de choisir la couleur obtenue, par la sélection du ou des cation(s) colorant(s) de la solution colorante, et son intensité, cette dernière dépendant en particulier de la concentration en cations colorants dans la solution colorante, mais également de la température et de la durée de mise en contact entre ladite composition talqueuse et la solution colorante.

Le(s)dit(s) cation(s) interfoliaires $M'^{m+}$, présent(s) dans l'(les) espace(s) interfoliaire(s) desdits feuillets élémentaires de ladite phase gonflante peuvent être de toute nature chimique, il peut par exemple s'agir d'au moins un ion ammonium $NH_4^+$, un cation ammonium quaternaire tel qu'un cation pyridinium ou un cation imidazolium, ou encore un cation $M'^{m+}$ dans lequel M' représente au moins un métal ayant pour formule :

$Mg_{z(1)}Co_{z(2)}\ Zn_{z(3)}Cu_{z(4)}Mn_{z(5)}Fe_{z(6)}Ni_{z(7)}Cr_{z(s)}K_{z(9)}Ca_{z(10)}\ Ce_{z(11)}\ Nd_{z(12)}Gd_{z(13)}Ho_{z(14)}\ Al_{z(15)}$ ; chaque $z(i)$ représentant un nombre réel de l'intervalle [0 ; 1], et tel que $\sum_{i=1}^{15} z(i) = 1$.

Avantageusement et selon l'invention, ladite solution colorante est une solution aqueuse.

Chaque cation colorant contenu dans la solution colorante peut provenir de tout composé adapté pour permettre une coloration, en particulier une coloration durable dans le temps voire irréversible, desdites particules minérales phyllosilicatées de la composition talqueuse. Chaque cation colorant est choisi en fonction du résultat désiré, en termes de composition chimique de la composition talqueuse colorée et bien sûr de coloration.

Avantageusement et selon l'invention, la solution colorante comprend des cations colorants d'au moins un élément choisi parmi les métaux de transition, les lanthanides et les actinides, et de préférence parmi les métaux de transition et les lanthanides.

Avantageusement et selon l'invention, ladite solution colorante est une solution comprenant au moins un sel de métal tel que les sels de chrome, les sels de manganèse, les sels de fer, les sels de cobalt, les sels de nickel, les sels de cuivre, les sels de zinc, les sels de cérium, les sels de néodyme, les sels de gadolinium, les sels d'holmium, les sels d'aluminium, et leurs mélanges. Ladite solution colorante est une solution de sel(s) métallique(s), par exemple une solution de chlorure(s) métallique(s), comprenant au moins un sel de métal pouvant notamment être choisi parmi les sels de chrome, tels que $CrCl_3$, les sels de manganèse, tels que $MnCl_2$, les sels de fer, tels que $FeCl_3$, les sels de cobalt, tels que $CoCl_2$, les sels de nickel, tels que $NiCl_2$, les sels de cuivre, tels que CuCl, les sels de zinc, tels que $ZnCl_2$, les sels de cérium, tels que $CeCl_3$, les sels de néodyme, tels que $NdCl_3$, les sels de gadolinium, tels que $GdCl_3$, les sels d'holmium, tels que $HoC1_3$, les sels d'aluminium, tels que $AlC1_3$, les sels de potassium, tels que KCl, les sels de calcium, tels que $CaCl_2$, les sels de magnésium, tels que $MgCl_2$, et leurs mélanges. Il peut également s'agir de sels organiques tels que des carboxylates.

En particulier, avantageusement et selon l'invention, ladite solution colorante est une solution comprenant au moins un sel de métal choisi parmi les sels de chrome, les sels de manganèse, les sels de fer, les sels de cobalt, les sels de nickel, les sels de cuivre, les sels de zinc, les sels de cérium, les sels de néodyme, les sels de gadolinium, les sels d'holmium, les sels d'aluminium, et leurs mélanges.

Dans un procédé selon l'invention, la durée de l'étape de coloration pendant laquelle on met en contact ladite composition talqueuse comprenant des particules minérales phyllosilicatées avec au moins un cation colorant, la concentration de chaque cation colorant dans la solution colorante et la température à laquelle a lieu cette étape, sont adaptées pour permettre une fixation des cations colorants aux particules minérales phyllosilicatées de ladite composition talqueuse et donc une coloration de la composition talqueuse.

Avantageusement et selon l'invention, la durée pendant laquelle on met en contact ladite composition talqueuse avec la solution colorante est suffisante pour permettre l'obtention de particules minérales phyllosilicatées colorées. Une durée de quelques minutes (par exemple supérieure à 2 minutes) peut être suffisante dans certains cas pour obtenir une légère coloration, notamment à une température suffisante et en présence d'une concentration en cation colorant suffisante et éventuellement en soumettant la solution colorante et la composition talqueuse aux ultrasons. Avantageusement et selon l'invention, ladite durée prédéterminée, pendant laquelle on met en contact ladite composition talqueuse avec une solution colorante, est supérieure à 5 minutes, notamment comprise entre 5 minutes et 7 jours, en particulier entre 10 minutes et 24 heures, par exemple entre 1 heure et 2 heures.

Avantageusement et selon l'invention, la concentration du(des) cation(s) colorant(s) présent(s) dans la solution colorante est choisie en tenant compte notamment de la température, de la durée de mise en contact avec la composition talqueuse, de la nature de la composition talqueuse et de la nature du (ou des) cation(s) colorant(s) utilisé(s), ladite concentration du(des) cation(s) colorant(s) étant choisie de façon à être suffisante pour permettre l'obtention de particules minérales phyllosilicatées colorées. Avantageusement et selon l'invention, la concentration du(des) cation(s) colorant(s) présent(s) dans la solution colorante est comprise entre 0,2 mol/L et la concentration à saturation du sel métallique correspondant au(x) cation(s) colorant(s). La concentration du(des) cation(s) colorant(s) présent(s) dans la solution colorante est par exemple comprise entre 0,2 mol/L et 5 mol/L.

L'étape de coloration peut être réalisée à toute température à laquelle la solution colorante est à l'état liquide et permettant l'obtention de particules minérales phyllosilicatées colorées. Avantageusement et selon l'invention, cette étape de coloration a lieu à une température comprise entre 5°C et 100°C. La mise en contact qui a lieu dans cette étape d'un procédé selon l'invention peut par exemple être opérée à température ambiante (20°C à 25°C) ou encore à une température légèrement supérieure à la température ambiante, notamment entre 30°C et 90°C et par exemple entre 40°C et 70°C, en fonction de la nature des cations colorants et des particules minérales phyllosilicatées à colorer, ainsi que de la nuance et l'intensité de la couleur souhaitée.

L'étape de coloration peut être réalisée en agitant ou non la composition colorante dans laquelle est ajoutée la composition talqueuse. Il est par exemple possible de n'agiter que quelques instants manuellement (par exemple à l'aide d'une tige métallique) la solution colorante au moment de l'ajout de la composition talqueuse à la solution colorante, puis de la laisser au repos le reste de l'étape de coloration. Avantageusement et selon l'invention, on met en contact ladite composition talqueuse comprenant des particules minérales phyllosilicatées avec la solution colorante sous agitation, par exemple sous agitation magnétique à l'aide d'un agitateur magnétique. Par exemple, une vitesse d'agitation lente est généralement suffisante pour permettre une mise en contact entre le (ou les) cation(s) colorant(s) et la composition talqueuse permettant l'obtention de particules minérales phyllosilicatées colorées.

À l'issue de cette étape de coloration d'un procédé selon l'invention, la composition talqueuse comprenant des particules minérales phyllosilicatées colorées obtenue peut être récupérée par élimination de la solution aqueuse colorante. La solution aqueuse colorante peut par exemple être éliminée après décantation naturelle de ladite composition talqueuse comprenant des particules minérales phyllosilicatées colorées et élimination de la solution surnageante ou encore par centrifugation de la solution colorante comprenant ladite composition talqueuse colorée obtenue. La composition talqueuse comprenant des particules minérales phyllosilicatées colorées récupérée peut ensuite être rincée de manière à éliminer les cations restant. La composition talqueuse comprenant des particules minérales phyllosilicatées colorées récupérée peut également être conservée et utilisée sans être rincée. Ainsi, avantageusement, dans un procédé selon l'invention, consécutivement à l'étape de coloration, on rince les particules minérales phyllosilicatées colorées obtenues à l'aide d'une solution aqueuse au moins sensiblement dénuée de cations colorants, et en particulier dénuée de cations colorants (c'est-à-dire de cations d'au moins un élément choisi parmi les métaux de transition, les lanthanides et les actinides).

À l'issue de cette étape de coloration d'un procédé selon l'invention, la composition talqueuse comprenant des particules minérales phyllosilicatées colorées peut être conservée ou utilisée en l'état, sous forme de gel ou de suspension aqueuse, ou encore être séchée de manière à éliminer au moins en partie, la solution aqueuse, notamment l'eau, encore présente. Avantageusement et selon l'invention, on sèche les particules minérales phyllosilicatées colorées obtenues après mise en contact de ladite composition talqueuse avec au moins un cation colorant, et avant ou après un éventuel rinçage. Ce séchage peut être effectué par tout moyen de séchage permettant l'élimination de cette solution aqueuse. Le séchage peut par exemple être opéré directement dans une étuve (par exemple à une température de l'ordre de 100°C), par atomisation, par séchage par irradiation aux micro-ondes ou encore par lyophilisation. Avantageusement et selon l'invention, on sèche la composition talqueuse comprenant des particules minérales phyllosilicatées colorées à une température comprise entre 60°C et 200°C.

En particulier, une étape de séchage dans une étuve à une température de l'ordre de 100°C ou 120°C permet d'intensifier ou de nuancer de façon plus ou moins importante, selon la nature du/des cation(s) colorant(s) notamment, la couleur des particules minérales phyllosilicatées colorées.

En outre, il est possible de réitérer au moins une fois ladite étape de coloration au cours de laquelle la composition talqueuse est mise en contact avec la solution colorante. De cette façon, il est possible de modifier ou de nuancer de façon plus ou moins importante la couleur d'une telle composition de manière à obtenir la coloration voulue.

En outre, avantageusement et selon l'invention, la composition talqueuse peut être formée d'une interstratification entre ladite phase gonflante et ladite phase non gonflante. Une telle interstratification est également appelée interstratifié T.O.T.-T.O.T. gonflant.

Avantageusement et selon l'invention, on prépare lesdites particules minérales phyllosilicatées par un traitement hydrothermal d'une composition comprenant des particules de formule $(Si_xGe_{1-x})_4 M_3O_{11}$, n'$H_2O$.

Avantageusement et selon l'invention, on réalise ledit traitement hydrothermal pendant une durée comprise entre 30 minutes et 60 jours et à une température comprise entre 150°C et 600°C.

En particulier, avantageusement et selon l'invention, ladite composition talqueuse de départ est obtenue par traitement hydrothermal d'un gel silico/germano-métallique- de formule chimique $(Si_xGe_{1-x})_4M_3O_{11}$, n'$H_2O$, ledit traitement hydrothermal étant réalisé à une température comprise entre 150°C et 300°C.

Avantageusement et selon l'invention, on effectue le traitement hydrothermal dudit gel silico/germano-métallique au moyen d'un autoclave. Il peut par exemple s'agir d'un autoclave formé d'un alliage à base de nickel tel que l'Hastelloy® (commercialisé par Haynes International, Kokomo, Etats-Unis) ou encore d'un autoclave en titane ou éventuellement en acier à chemisage intérieur en polytétrafluoroéthylène (PTFE) dans un cas où la température de traitement hydrothermal ne dépasse pas 250°C. Un tel autoclave peut présenter toute contenance, par exemple une contenance allant de 200 millilitres à 50 litres.

Avantageusement et selon l'invention, on réalise ledit traitement hydrothermal sous agitation. A cet effet, on peut par exemple utiliser un autoclave muni d'une hélice métallique interne.

Avantageusement et selon l'invention, on réalise ledit traitement hydrothermal sous pression de vapeur saturante. Avantageusement et selon l'invention, on rajoute dans l'autoclave, avec ledit gel silico/germano-métallique, une quantité d'eau (de préférence de l'eau distillée) au moins suffisante pour créer, à l'intérieur de cet autoclave porté à la température de traitement, une atmosphère de vapeur saturante.

Avantageusement et selon l'invention, pour une température et une durée de traitement hydrothermal déterminées, on réalise une adjonction complémentaire d'eau audit gel silico/germano-métallique de façon à ajuster le ratio eau/solide représentatif du mélange réactionnel à base de gel silico/germano-métallique à traiter, en fonction du rapport volumique - phase minérale gonflante/phase minérale non gonflante - souhaité pour les particules d'interstratifié T.O.T.-T.O.T. gonflant.

En outre, avantageusement et selon l'invention, à l'issue d'au moins ladite étape de coloration, on soumet ladite composition comprenant des particules minérales phyllosilicatées colorées obtenue à un traitement thermique, pendant une durée prédéterminée et à une température comprise entre 200°C et 600°C, notamment entre 300°C et

600°C.

Avantageusement et selon l'invention, ledit traitement thermique peut être effectué à basse pression, notamment à une pression inférieure à 5 bars, en particulier à pression atmosphérique, et à l'air ambiant. Un tel traitement thermique permet de convertir de façon très simple une composition comprenant des particules minérales phyllosilicatées colorées présentant au moins une phase gonflante en une composition comprenant des particules minérales phyllosilicatées colorées présentant au moins une phase non gonflante, c'est-à-dire une composition comprenant des particules minérales phyllosilicatées de formule $(Si_xGe_{1-x})_4 M_3O_{10}(OH)_2$, colorée et structurellement très similaire à une composition de talc naturel. Une telle composition talqueuse colorée peut avantageusement se substituer à une composition de talc naturel dans diverses applications.

Un tel traitement thermique peut également permettre de nuancer et de modifier de façon plus ou moins importante la couleur des particules minérales phyllosilicatées colorées. Un traitement thermique à 250°C de particules minérales phyllosilicatées de formule $Si_4Mg_3O_{10}(OH)_2$ colorées au cobalt (Co) permet par exemple de passer d'une couleur rose à une couleur rose foncé à marron.

En outre, avantageusement et selon l'invention, ledit traitement thermique est effectué dans une atmosphère à humidité contrôlée, et en particulier il s'agit d'un traitement thermique anhydre.

L'invention s'étend à une composition susceptible d'être obtenue par un procédé selon l'invention. Une composition selon l'invention comprend des particules minérales phyllosilicatées qui présentent des propriétés de coloration et appartiennent au groupe formé :

- des particules formées d'un empilement de feuillets élémentaires, et ayant pour formule chimique :

$$(Si_xGe_{1-x})_4\ M_3O_{10}(OH)_2$$

  - M désignant au moins un métal divalent et ayant pour formule $Mg_{y(1)}Co_{y(2)}\ Zn_{y(3)}Cu_{y(4)}Mn_{y(5)}Fe_{y(6)}Ni_{y(7)}Cr_{y(8)}$; chaque *y(i)* représentant un nombre réel de l'intervalle [0 ;1], et tel que $\sum_{i=1}^{8} y(i) = 1$,
  - x étant un nombre réel de l'intervalle [0 ; 1],

- des particules formées d'un empilement de feuillets élémentaires et présentant au moins un espace interfoliaire entre deux feuillets élémentaires consécutifs, et ayant pour formule chimique :

$$(Si_xGe_{1-x})_4\ M_{3-\varepsilon}\ O_{10}\ (OH)_2,\ (M'^{m+})\varepsilon'.\ nH_2O$$

  - M désignant au moins un métal divalent et ayant pour formule $Mg_{y(1)}Co_{y(2)}\ Zn_{y(3)}Cu_{y(4)}Mn_{Y(5)}Fe_{y(6)}Ni_{y(7)}Cr_{y(8)}$; chaque *y(i)* représentant un nombre réel de l'intervalle [0 ; 1], et tel que $\sum_{i=1}^{8} y(i) = 1$,
  - $M'^{m+}$ désignant au moins un cation, dit cation interfoliaire, présent dans au moins un espace interfoliaire desdits feuillets élémentaires,
  - x étant un nombre réel de l'intervalle [0 ; 1],
  - $\varepsilon$ étant un nombre réel de l'intervalle [0 ; 3[ et désignant un déficit cationique desdits feuillets élémentaires,
  - $\varepsilon'$ étant un nombre réel de l'intervalle [0 ; 3[ et désignant une proportion de cation(s) interfoliaire(s) $M'^{m+}$ présent(s) dans l'(les) espace(s) interfoliaire(s) desdits feuillets élémentaires de ladite phase gonflante,
  - m étant un nombre réel de l'intervalle [1 ; 3] et désignant une charge cationique du cation $M'^{m+}$,
  - n étant relatif à un nombre de molécule(s) d'eau associée(s) auxdites particules,

lesdites particules minérales silicatées présentant une épaisseur inférieure à 100 nm et dont la plus grande dimension est inférieure à 10 $\mu$m.

Une composition selon l'invention présente une stabilité chimique importante. En outre, de telles compositions selon l'invention peuvent présenter diverses couleurs, selon la nature chimique des cations colorants fixés aux particules minérales phyllosilicatées. Des compositions comprenant des particules minérales phyllosilicatées colorées, selon l'invention, peuvent être de toutes couleurs, plus ou moins claires ou foncées et plus ou moins intenses.

Une composition comprenant des particules minérales phyllosilicatées colorées selon l'invention, peut être obtenue par un procédé de préparation d'une composition talqueuse comprenant des particules minérales phyllosilicatées selon l'invention.

Avantageusement, une composition selon l'invention comprend des particules minérales phyllosilicatées colorées formées d'une interstratification entre ladite phase gonflante et ladite phase non gonflante.

En particulier, l'invention concerne une composition obtenue par un procédé selon l'invention.

L'invention concerne aussi un procédé de préparation d'une composition comprenant des particules minérales silicatées colorées, et une composition talqueuse comprenant des particules minérales phyllosilicatées colorées, caractérisée en combinaison par tout ou partie des caractéristiques mentionnées ci-dessus ou ci-après.

D'autres buts, avantages et caractéristiques de l'invention apparaissent à la lecture de la description et des exemples qui suivent et qui se réfèrent à la figure unique qui représente des diffractogrammes correspondant à l'analyse en diffraction des rayons X effectuée sur neuf compositions colorées obtenues par un procédé selon l'invention, à partir de compositions talqueuses comprenant des particules minérales phyllosilicatées, avec des cations colorants différents.

Une composition talqueuse utilisée dans un procédé selon l'invention peut par exemple être préparée selon le protocole de synthèse suivant.

A/ - PROTOCOLE GENERAL DE SYNTHESE D'UNE COMPOSITION TALQUEUSE UTILISÉE DANS UN PROCÉDÉ SELON L'INVENTION

1/ - <u>Préparation d'un gel silico/germano-métallique</u>

Selon une première variante, le gel silico/germano-métallique est préparé par une coprécipitation selon l'équation de réaction suivante :

$$4\begin{pmatrix}(Na_2OSiO_2)_x\\(Na_2OGeO_2)_{1-x}\end{pmatrix}+2HCl+mH_2O+3\begin{pmatrix}y_{(1)}(MgCl_2)+y_{(2)}(CoCl_2)+y_{(3)}(ZnCl_2)\\+y_{(4)}(CuCl_2)+y_{(5)}(MnCl_2)+y_{(6)}(FeCl_2)\\+y_{(7)}(NiCl_2)+y_{(8)}(CrCl_2)\end{pmatrix}$$

$$\longrightarrow [(Si_xGe_{1-x})_4M_3O_{11},n'H_2O]+8NaCl+(m-n'+1)H_2O$$

Cette réaction de coprécipitation permet d'obtenir un gel silico/germano-métallique hydraté ayant la stoechiométrie du talc (4 atomes de silicium (Si) et/ou de germanium (Ge) pour 3 atomes dudit métal divalent M).

Elle est mise en oeuvre à partir de :

1. une solution aqueuse de métasilicate de sodium penta-hydraté ou une solution aqueuse de métagermanate de sodium, ou un mélange de ces deux solutions dans les proportions molaires *x*/(1-*x*),
2. une solution de chlorure de métal, préparée avec un ou plusieurs sels de métal (sous la forme de cristaux hygroscopiques) dilué(s) dans de l'eau distillée, et
3. une solution d'acide chlorhydrique 1N.

La préparation du gel silico/germano-métallique est réalisée en suivant le protocole suivant :

1. on mélange les solutions d'acide chlorhydrique et la solution de chlorure(s) de métal (ou de métaux),
2. on ajoute ce mélange à la solution de métasilicate et/ou de métagermanate de sodium ; le gel de coprécipitation se forme instantanément,
3. on récupère le gel après centrifugation (à 7000 tours/min, pendant 15 min) et élimination du surnageant (solution de chlorure de sodium formée),
4. on lave le gel avec de l'eau distillée ou osmosée, ou avec de l'eau du robinet (au minimum deux cycles de lavage/centrifugation sont nécessaires).

Selon une deuxième variante, le gel silico/germano-métallique peut être préparé par une réaction de coprécipitation impliquant, à titre de réactif, au moins un composé comprenant du silicium, au moins un sel dicarboxylate de formule $M(R_1\text{-}COO)_2$ ($R_1$ étant choisi parmi H et les groupements alkyles comprenant moins de 5 atomes de carbone)

en présence d'au moins un sel carboxylate de formule $R_2$-COOX dans laquelle X désigne un métal choisi dans le groupe formé de Na et K, et $R_2$ est choisi parmi H et les groupements alkyles comprenant moins de 5 atomes de carbone.

Cette réaction de coprécipitation permet d'obtenir un hydrogel silico/germano-métallique hydraté ayant la stoechiométrie du talc (4 Si/Ge pour 3 M, M ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque *y(i)* représentant un nombre réel de l'intervalle [0 ; 1], et tel que $\sum_{i=1}^{8} y(i) = 1$).

L'hydrogel silico/germano-métallique est préparé par une réaction de coprécipitation mise en oeuvre à partir de :

1. une solution aqueuse de métasilicate de sodium penta-hydraté ou une solution aqueuse de métagermanate de sodium, ou un mélange de ces deux solutions dans les proportions molaires *x*/(1-*x*),
2. une solution de sel(s) dicarboxylate(s), préparée avec un ou plusieurs sel(s) dicarboxylate(s) de formule(s) $M(R_1\text{-COO})_2$ dilué(s) dans un acide carboxylique, tel que l'acide acétique, et
3. une solution de sel(s) carboxylate(s), préparée avec un ou plusieurs sel(s) carboxylate(s) de formule(s) $R_2$-COOX dilué(s) dans de l'eau distillée.

La préparation de cet hydrogel silico/germano-métallique est réalisée en suivant le protocole suivant :

1. on mélange les solutions de métasilicate de sodium et de sel(s) carboxylate(s) de formule(s) $R_2$-COOX,
2. on y ajoute rapidement la solution de sel(s) dicarboxylate(s) de formule(s) $M(R_1\text{-COO})_2$; l'hydrogel de coprécipitation se forme instantanément.

A l'issue de cette première phase, on obtient un gel silico/germano-métallique - $(Si_xGe_{1-x})_4M_3O_{11}$, n'$H_2O$ - hydraté et de consistance gélatineuse (éventuellement en présence du ou des sel(s) carboxylate(s) de formule(s) $R_2$-COOX et $R_1$-COOX dans le cas de la deuxième variante). Ce gel présente un comportement thixotropique, c'est-à-dire qu'il passe d'un état visqueux à un état liquide lorsqu'on l'agite, puis retrouve son état initial si on le laisse au repos pendant un temps suffisant.

Le gel silico/germano-métallique peut également être récupéré après centrifugation (par exemple entre 3000 et 15 000 tours par minute, pendant 5 à 60 minutes) et élimination du surnageant, éventuellement lavage à l'eau déminéralisée (par exemples deux lavages et centrifugations successifs) puis séchage, par exemple dans une étuve (60°C, 2 jours), par lyophilisation, par séchage par atomisation ou encore par séchage sous irradiation de micro-ondes. Les particules silico/germano-métalliques de formule $(Si_xGe_{1-x})_4M_3O_{11}$, n'$H_2O$ peuvent ainsi être stockées sous la forme d'une poudre en vue d'un traitement hydrothermal ultérieur. Les particules silico/germano-métalliques obtenues sont, si nécessaire, broyées à l'aide d'un mortier (par exemple un mortier en agate) de façon à obtenir une poudre homogène.

2/ - Traitement hydrothermale du gel silico/germano-métallique

Le gel silico/germano-métallique tel que précédemment obtenu est soumis à un traitement hydrothermal, à une température comprise entre 150°C et 600°C, et notamment à une température comprise entre 150°C et 400°C.

Pour procéder au traitement hydrothermal :

1. on place le gel, dans un réacteur (de 400 ml) ; éventuellement on ajuste le rapport eau/solide en ajoutant de l'eau, notamment pour éviter la calcination de la fraction solide) ; afin d'éviter tout problème de fuite du réacteur, celui-ci est rempli aux 2/3 de son volume,
2. éventuellement, on ajoute sous agitation une solution comprenant au moins un sel carboxylate de formule $R_2$-COOX, sous une forme hydratée ou anhydre, X désignant un métal choisi dans le groupe formé de Na et K, et $R_2$ étant choisi parmi H et les groupements alkyles comprenant moins de 5 atomes de carbone,
3. le réacteur est placé à l'intérieur d'une étuve ou d'un four à conduction, à la température de réaction (établie entre 150°C et 600°C, en particulier entre 150°C et 400°C), pendant toute la durée du traitement (30 minutes à 60 jours).

A l'issue de ce traitement hydrothermal, on obtient une composition talqueuse colloïdale comprenant des particules minérales phyllosilicatées, en solution dans l'eau. Les particules minérales obtenues à l'issue de ce traitement hydrothermal peuvent en particulier être des particules d'interstratifié T.O.T.-T.O.T. gonflant.

Le sel carboxylate éventuellement présent pendant le traitement hydrothermal peut être ajouté au moment de réaliser ledit traitement hydrothermal et/ou provenir du milieu de précipitation du gel silico/germano-métallique conformément à la deuxième variante de préparation du gel silico/germano-métallique. La réalisation du traitement hydrothermal en présence d'un sel carboxylate permet d'améliorer la réaction de conversion du gel silico/germano-métallique en

une composition talqueuse comprenant des particules minérales phyllosilicatées, notamment en l'accélérant. Dans les cas où le traitement hydrothermal est réalisé en présence d'un tel sel carboxylate, la température à l'intérieur de l'étuve ou de l'autoclave est comprise entre 150°C et 400°C.

Au terme de ce traitement hydrothermal, le contenu du réacteur est récupéré après filtration et/ou éventuellement centrifugation (par exemple entre 3000 et 15 000 tours par minute, pendant 5 à 60 minutes) et élimination du surnageant. La composition talqueuse récupérée est éventuellement séchée, par exemple dans une étuve (60°C, 2 jours), par lyophilisation, par séchage par atomisation ou encore par séchage sous irradiation de micro-ondes.

Au terme d'un tel traitement hydrothermal, on obtient une composition solide divisée comprenant par exemple, des particules d'interstratifié T.O.T.-T.O.T. gonflant ayant pour formule :

- $Si_4Mg_3O_{10}(OH)_2$ / $Si_4Mg_{3-\varepsilon}O_{10}(OH)_2$, $(Mg^{2+})_{\varepsilon'}$ • $nH_2O$,
- $Si_4Ni_3O_{10}(OH)_2$ / $Si_4Ni_{3-\varepsilon}O_{10}(OH)_2$, $(Ni^{2+})_{\varepsilon'}$• $nH_2O$,
- $Si_4Co_3O_{10}(OH)_2$ / $Si_4Co_{3-\varepsilon}O_{10}(OH)_2$, $(Co^{2+})_{\varepsilon'}$ • nH20,
- $Si_4Cu_3O_{10}(OH)_2$ $Si_4Cu_{3-\varepsilon}O_{10}(OH)_2$, $(Cu^{2+})_{\varepsilon'}$ • nH20,
- $Si_4Mn_3O_{10}(OH)_2$ / $Si_4Mn_{3-\varepsilon}O_{10}(OH)_2$, $(Mn^{2+})_{\varepsilon'}$ • $nH_2O$,
- $Si_4Fe_3O_{10}(OH)_2$ /$Si_4Fe_{3-\varepsilon}O_{10}(OH)_2$, $(Fe^{2+})_{\varepsilon'}$ • $nH_2O$, ou encore
- $Si_4Zn_3O_{10}(OH)_2$ $Si_4Zn_{3-\varepsilon}O_{10}(OH)_2$, $(Zn^{2+})_{\varepsilon'}$ • nH20,

en fonction de la nature du ou des chlorure(s) de métal utilisé(s) pour la préparation du gel silico/germano-métallique (et également, le cas échéant, des proportions respectives de ces chlorures de métal).

B/ - PROCÉDÉ DE PRÉPARATION D'UNE COMPOSITION TALQUEUSE COMPRENANT DES PARTICULES MINÉRALES PHYLLOSILICATÉES COLORÉES SELON L'INVENTION

Les particules minérales phyllosilicatées, par exemple des particules d'interstratifié T.O.T.-T.O.T. gonflant telles que précédemment obtenues, sont mises en contact avec une solution, dite solution colorante, comprenant au moins un cation colorant d'un élément choisi parmi les métaux de transition, les lanthanides et les actinides.

Pour ce faire :

1. on place les particules minérales phyllosilicatées préalablement séchées (par exemple à l'étuve) dans une solution aqueuse dans laquelle est dissous un sel colorant, tel que défini précédemment pendant une durée prédéterminée comprise entre 5 minutes et 7 jours, sous agitation ou non, la concentration de ce sel dans la solution étant prédéterminée et comprise entre 0,2 mol/L et 5 mol/L,
2. on récupère les particules minérales phyllosilicatées par centrifugation de la solution, par exemple pendant 10 minutes à 3500 tours/minute, et élimination de la solution surnageante,
3. éventuellement, on rince une à deux fois les particules minérales phyllosilicatées avec de l'eau distillée, par centrifugation, par exemple pendant 10 minutes à 3500 tours/minute et élimination de la solution surnageante à chaque fois, de façon à éliminer les cations colorants en excédant, et
4. on sèche les particules minérales phyllosilicatées obtenues, par exemple pendant 12 heures dans une étuve à 100°C.

EXEMPLES 1 à 11

On prépare ainsi 10 échantillons de particules d'interstratifié T.O.T.-T.O.T. gonflant $S_{14}M_3O_{10}(OH)_2$ / $(Si_xGe_{1-x})_4M_{3-\varepsilon}O_{10}$ $(OH)_2$, $(M'^{m+})_{\varepsilon'}$ • $nH_2O$ :

- à partir de particules d'interstratifié T.O.T.-T.O.T. gonflant $Si_4Mg_3O_{10}(OH)_2$ / $Si_4Mg_{3-\varepsilon}O_{10}(OH)_2$, $(Mg^{2+})_{\varepsilon'}$ • $nH_2O$ et en utilisant comme sel colorant, respectivement $CrCl_3$, $MnCl_2$, $FeCl_3$, $CoCl_2$, $NiCl_2$, CuCl, $CeCl_3$, $NdCl_3$ et $HoCl_3$ (échantillons 1 à 9), et
- à partir de particules d'interstratifié T.O.T.-T.O.T. gonflant $Si_4Ni_3O_{10}(OH)_2$ / $Si_4Ni_{3-\varepsilon}O_{10}(OH)_2$, $(Ni^{2+})_{\varepsilon'}$ • $nH_2O$ et en utilisant $FeCl_3$ comme sel colorant (échantillon 10).

On utilise 1 gramme des particules d'interstratifié T.O.T.-T.O.T. gonflant $Si_4Mg_3O_{10}(OH)_2$ / $Si_4Mg_{3-\varepsilon}O_{10}(OH)_2$, $(Mg^{2+})_{\varepsilon'}$ • $nH_2O$ ou $Si_4Ni_3O_{10}(OH)_2$ / $Si_4Ni_{3-\varepsilon}O_{10}(OH)_2$, $(Ni^{2+})_{\varepsilon'}$ • $nH_2O$ préalablement séchées à l'étuve dans 40 mL d'une solution aqueuse dans laquelle est dissous un sel colorant avec une concentration de 1 mol/L, pendant 1 heure, sous agitation.

L'échantillon 11 correspond à un interstratifié T.O.T.-T.O.T. gonflant $Si_4Mg_3O_{10}(OH)_2/Si_4Mg_{3-\varepsilon}O_{10}(OH)_2,(Mg^{2+})_{\varepsilon'}$ • $nH_2O$ n'ayant pas été soumis à une étape de coloration selon l'invention.

Les 11 échantillons ont été préparés selon la première variante de préparation du gel silico/germano-métallique, suivie d'un traitement hydrothermal pendant 48 heures à 160°C.

Les particules minérales d'interstratifié T.O.T.-T.O.T. gonflant des échantillons 1 à 11 présentent une épaisseur inférieure à 10 nm et une plus grande dimension inférieure à 50 nm. En particulier, elles présentent, pour la plupart, une épaisseur inférieure à 5 nm et une plus grande dimension inférieure à 30 nm. L'épaisseur et la plus grande dimension desdites particules ont été mesurées par observation au microscope électronique en transmission (MET).

Sur le tableau 1 sont reportés, pour chacun des échantillons 1 à 10 de particules d'interstratifié T.O.T.-T.O.T. gonflant, la nature de l'élément M, la nature du cation colorant Z, la concentration massique [Z] en cation colorant $Z^{p+}$ dans lesdites particules d'interstratifié T.O.T.-T.O.T. gonflant mesurée à l'aide d'une microsonde électronique Cameca SX50®, le rapport atomique en cation colorant Z par rapport aux atomes de silicium (Z/Si) et la couleur obtenue.

Tableau 1

| M | Z | [Z] (% en poids) | Rapport atomique Z/Si | Couleur | N° de l'échantillon |
|---|---|---|---|---|---|
| Mg | Cr | 2,1 | 0,036 | vert gris | 1 |
| Mg | Mn | 3,3 | 0,061 | marron | 2 |
| Mg | Fe | 4,1 | 0,070 | ocre | 3 |
| Mg | Co | 4,0 | 0,072 | rose | 4 |
| Mg | Ni | 4,6 | 0,076 | vert clair | 5 |
| Mg | Cu | 5,2 | 0,085 | bleu | 6 |
| Mg | Ce | 7,1 | 0,060 | jaune | 7 |
| Mg | Nd | 6,6 | 0,054 | rose très clair | 8 |
| Mg | Ho | 7,3 | 0,058 | rose très clair | 9 |
| Ni | Fe | 2,2 | 0,047 | vert | 10 |
| Mg | - | - | - | blanc | 11 |

EXEMPLES 12 à 21

Les échantillons 12 à 21 ont été préparés selon la première variante de préparation du gel silico/germano-métallique, suivie d'un traitement hydrothermal à 300°C pendant 3 jours (72 heures) pour les échantillons 12 à 14 et à 300°C pendant 6 heures pour les échantillons 15 à 21.

On utilise 0,5 gramme de particules minérales phyllosilicatées préalablement séchées à l'étuve dans 40 mL d'une solution aqueuse dans laquelle est dissous un sel colorant avec une concentration molaire $[Z]_2$, pendant une durée $\Delta t_2$, sous agitation.

L'étape de coloration pour les échantillons 12 à 21 est réalisée conformément aux étapes 1 à 3 décrites ci-dessus puis les particules minérales phyllosilicatées colorées obtenues sont séchées dans une étuve à 110°C, pendant 12 heures pour les échantillons 12 à 15 et pendant 36 heures pour les échantillons 16 à 21.

En outre, au cours de l'étape de coloration les échantillons 12 à 15 ont été soumis aux ultrasons pendant les dernières 20 min de cette étape. L'échantillon 15 a également été soumis pendant 1 heure aux ultrasons au début de l'étape de coloration. Par ailleurs, l'échantillon 17 a été soumis aux ultrasons pendant 3 minutes au début de l'étape de coloration et cinq fois pendant 3 minutes au cours de l'étape de coloration.

Les particules minérales phyllosilicatées des échantillons 12 à 21 présentent une épaisseur inférieure à 50 nm et une plus grande dimension inférieure à 200 nm. L'épaisseur et la plus grande dimension desdites particules ont été mesurées par observation au microscope électronique en transmission (MET).

Sur le tableau 2 sont reportés, pour chacun des échantillons 12 à 21 la nature de l'élément M des particules minérales phyllosilicatées, la nature du cation colorant Z, la concentration molaire $[Z]_2$ en cation colorant $Z^{p+}$ dans la solution colorante, la durée $\Delta t_2$ de l'étape de coloration et la couleur obtenue.

Tableau 2

| M | Z | $[Z]_2$ (mol.L$^{-1}$) | $\Delta t_2$ | Couleur | N° de l'échantillon |
|---|---|---|---|---|---|
| Mg | Ni | 3 | 6 jours | vert clair | 12 |
| Ni | Ni | 3 | 6 jours | vert clair | 13 |
| Co | Ni | 3 | 6 jours | rose | 14 |
| Mg | Ni | 3 | 7 jours | vert très clair | 15 |
| Mg | Ni | 3 | 4 jours | vert clair | 16 |
| Mg | Ni | 3 | 4 jours | vert clair | 17 |
| Mg | Ni | 1 | 4 jours | vert clair | 18 |
| Mg | Mn | 1 | 4 jours | brun | 19 |
| Mg | Co | 1 | 4 jours | beige | 20 |
| Mg | Fe | 1 | 4 jours | ocre | 21 |

EXEMPLES 22 à 25

Les échantillon 22 à 25 ont été préparés selon la première variante de préparation du gel silico/germano-métallique suivie d'un traitement hydrothermal à une température $T_3$ pendant une durée $\Delta t_3$.

L'étape de coloration pour les échantillons 22 à 25 est réalisée conformément aux étapes 1 à 3 décrites ci-dessus. On utilise 0,6 gramme de particules minérales phyllosilicatées pour l'échantillon 22 (à partir d'un gel à 10% d'extrait sec), et 1 gramme de particules minérales phyllosilicatées préalablement séchées à l'étuve pour les échantillons 23 à 25, dans 40 mL d'une solution aqueuse dans laquelle est dissous un sel colorant avec une concentration molaire de 1 mol/L, pendant 30 minutes, sous agitation. Les particules récupérées ont ensuite été séchées dans une étuve à 110°C pendant 48 heures.

En outre, au cours de l'étape de coloration les échantillons 22, 23 et 24 sont simultanément soumis aux ultrasons. La température à laquelle est réalisée l'étape de coloration pour les échantillons 22, 23 et 24 est de 20°C. L'échantillon 25 n'a pas été soumis aux ultrasons au cours de l'étape de coloration. La température à laquelle est réalisée l'étape de coloration pour l'échantillon 25 est de 80°C.

Les particules minérales phyllosilicatées des échantillons 22 à 25 présentent une épaisseur inférieure à 50 nm et une plus grande dimension inférieure à 200 nm. L'épaisseur et la plus grande dimension desdites particules ont été mesurées par observation au microscope électronique en transmission (MET).

Sur le tableau 3 sont reportés, pour chacun des échantillons 22 à 25 de particules minérales phyllosilicatées, la nature de l'élément M, la nature du cation colorant Z, la température $T_3$ et la durée $\Delta t_3$ du traitement hydrothermal par lequel ont été préparées les particules minérales phyllosilicatées ainsi que la couleur obtenue après l'étape de coloration.

Tableau 3

| M | Z | $T_3$ (°C) | $\Delta t_3$ | Couleur | N° de l'échantillon |
|---|---|---|---|---|---|
| Mg | Ni | 300 | 6 heures | vert clair | 22 |
| Mg | Ni | 220 | 2 jours | vert clair | 23 |
| Mg | Ni | 160 | 2 jours | vert clair | 24 |
| Mg | Ni | 160 | 2 jours | vert | 25 |

EXEMPLES 26 à 29

Les échantillons 26 à 29 ont été préparés selon la première variante de préparation du gel silico/germano-métallique, suivie d'un traitement hydrothermal à 160°C pendant 3 jours (72 heures) pour les échantillons 26, 27 et 29 et à 160°C pendant 2 jours (48 heures) pour l'échantillon 28.

On utilise 1 gramme de particules minérales phyllosilicatées pour les échantillons 26 et 27, et 2 grammes de particules minérales phyllosilicatées pour les échantillons 28 et 29. Les particules minérales phyllosilicatées préalablement séchées à l'étuve sont mises en contact avec 40 mL d'une solution aqueuse dans laquelle est dissous un sel colorant avec une concentration molaire $[Z]_2$, pendant une durée $\Delta t_2$, sous agitation.

L'étape de coloration pour les échantillons 26 à 29 est réalisée conformément aux étapes 1 à 3 décrites ci-dessus puis les particules minérales phyllosilicatées colorées obtenues sont séchées dans une étuve à 110°C, pendant 12 heures pour les échantillons 26 et 27, et à 110°C pendant 24 heures pour les échantillons 28 et 29.

En outre, au début de l'étape de coloration les échantillons 28 et 29 ont été soumis aux ultrasons pendant 2 min.

Les particules minérales phyllosilicatées des échantillons 26 à 29 présentent une épaisseur inférieure à 50 nm et une plus grande dimension inférieure à 200 nm. L'épaisseur et la plus grande dimension desdites particules ont été mesurées par observation au microscope électronique en transmission (MET).

Sur le tableau 4 sont reportés, pour chacun des échantillons 26 à 29 la nature de l'élément M des particules minérales phyllosilicatées, la nature du cation colorant Z, la concentration molaire $[Z]_2$ en cation colorant $Z^{p+}$ dans la solution colorante, la durée $\Delta t_2$ de l'étape de coloration et la couleur obtenue.

Tableau 4

| M | Z | $[Z]_2$ (mol.L$^{-1}$) | $\Delta t_2$ | Couleur | N° de l'échantillon |
|---|---|---|---|---|---|
| Ni | Fe | 1 | 60 min | vert | 26 |
| Ni | Ni | 1 | 2 heures | vert | 27 |
| Mg | Co | 1 | 2 heures | rose à violet | 28 |
| Ni | Co | 1 | 2 heures | vert | 29 |

De telles compositions comprenant des particules minérales phyllosilicatées colorées présentent par exemple un intérêt particulier dans le domaine cosmétique. On peut par exemple envisager d'utiliser ces particules dans des compositions cosmétiques de soins et/ou de maquillage, à titre de charges minérales et/ou à titre d'agent de coloration. De telles compositions de particules minérales phyllosilicatées colorées permettront en outre de diminuer ou remplacer les pigments organiques.

EXEMPLE COMPARATIF

A titre d'exemple comparatif, des particules d'un talc naturel pur issu de la carrière de Trimouns (Luzenac, France) présentant une épaisseur supérieure à 300 nm et dont la plus grande dimension est supérieure à 20 μm ont été mises en contact avec des cations colorants dans une étape de coloration selon l'invention.

Lesdites particules de talc naturel (1 gramme) sont disposées dans 40 mL d'une solution aqueuse dans laquelle est dissous un sel colorant ($NiCl_2$), pendant 30 minutes sous agitation puis 5 heures au repos. La concentration du sel colorant dans la solution est de 1 mol/L. Après une centrifugation pendant 5 minutes à 7000 tours/minute et élimination de la solution surnageante, les particules de talc naturel sont séchées à 120°C pendant 12 heures. Les particules de talc sont ensuite rincées avec de l'eau distillée puis la solution est centrifugée pendant 5 minutes à 9000 tours/minute. Le surnageant éliminé est trouble et de couleur verte. Les particules de talc naturel récupérées sont blanches. Après séchage on obtient des particules de talc naturel présentant une couleur identique à leur coloration de départ, c'est-à-dire blanche.

Une étape de coloration selon l'invention réalisée sur des particules de talc naturel présentant une épaisseur supérieure à 100 nm et dont la plus grande dimension est supérieure à 10 μm ne permet donc pas d'obtenir des particules minérales silicatées colorées.

C/ - ANALYSE ET CARACTERISATION STRUCTURELLES

En diffraction des rayons X (RX), un talc naturel tel qu'un talc provenant de la mine d'ARNOLD (Etat de New-York, USA), est connu pour présenter les raies de diffraction caractéristiques suivantes (d'après la publication de Ross M., Smith W.L. et Ashton W.H., 1968, « Triclinic talc and associated amphiboles from Gouverneur mining district, New York ; American Mineralogist », volume 53, pages 751-769) :

- pour le plan (001), une raie située à une distance de 9,34 Å ;
- pour le plan (002), une raie située à une distance de 4,68 Å ;
- pour le plan (020), une raie située à une distance de 4,56 Å ;
- pour le plan (003), une raie située à une distance de 3,115 Å ;
- pour le plan (060), une raie située à une distance de 1,52 Å.

La figure unique présente les résultats d'analyses réalisées en diffraction des rayons X obtenus avec les compositions précédentes.

Les diffractogrammes ont été enregistrés sur un appareil CPS 120 commercialisé par la société INEL (Artenay, France). Il s'agit d'un diffractomètre à détecteur courbe permettant une détection en temps réel sur un domaine angulaire de 120°. La tension d'accélération utilisée est de 40 kV et l'intensité de 25 mA. La relation de Bragg donnant l'équidistance structurale est : $d_{hkl}$=O,89449/sinθ (avec l'utilisation d'une anticathode au cobalt).

Les diffractogrammes RX des échantillons 1, 2, 3, 4, 5, 6, 7, 8 et 9 sont respectivement représentés par les courbes 1, 2, 3, 4, 5, 6, 7, 8 et 9 de la figure unique. La courbe 11 de la figure unique représente le diffractogramme RX de particules d'interstratifié T.O.T.-T.O.T. gonflant $Si_4Mg_3O_{10}(OH)_2$ / $Si_4Mg_{3-\varepsilon}O_{10}(OH)_2$, $(Mg^{2+})_{\varepsilon'}$ • $nH_2O$ n'ayant pas été soumis à un procédé selon l'invention (soit avant coloration et élimination de la solution aqueuse : échantillon 11). Ces analyses confirment donc qu'aucune nouvelle phase n'est formée pendant le procédé de coloration selon l'invention.

Les seules différences à noter entre la courbe 11 et les courbes 1 à 9 consistent dans l'existence, sur la courbe 11, de raies situées à 37° et à 53° représentatives de la présence de sels issus du milieu de traitement hydrothermal. Ces sels ont été éliminés dans la solution colorante et par rinçage en ce qui concerne les échantillons 1 à 9.

D/ - TRAITEMENT THERMIQUE DE COMPOSITIONS D'INTERSTRATIFIÉ T.O.T.-T.O.T. GONFLANT

Une composition d'interstratifié T.O.T.-T.O.T. gonflant colorée préparée comme précédemment décrit, après séchage et broyage, peut être soumise à un traitement thermique anhydre pendant une durée comprise entre 30 minutes et 24 heures, notamment entre 1 heure et 10 heures, et à une température comprise entre 300°C et 600°C, notamment entre 500 et 550° C. Pour ce faire, celle-ci est placée dans un creuset en platine puis est chauffée. On peut également utiliser un creuset en céramique ou en tout autre matériau approprié. La réaction est réalisée à basse pression, inférieure à 5 bars -notamment à la pression atmosphérique-.

Les structures cristalline et lamellaire des particules d'interstratifié T.O.T.-T.O.T. gonflant colorées obtenues au cours et à l'issue de la mise en oeuvre du procédé précédemment défini suivi d'un traitement thermique ont été caractérisées en diffraction des rayons X.

Les résultats de ces analyses confirment la possibilité d'obtenir des compositions talqueuses colorées, par un traitement thermique de compositions de particules colorées d'interstratifié T.O.T.-T.O.T. gonflant. La couleur des compositions talqueuses colorées obtenues reste la même après traitement thermique mais peut être plus foncée que celle des compositions de particules colorées d'interstratifié T.O.T.-T.O.T. gonflant correspondantes, avant traitement thermique.

E/ - CARACTERISATION DE LA STABILITÉ DE LA COLORATION DES PARTICULES MINÉRALES PHYLLOSILICATÉES COLORÉES SELON L'INVENTION

La stabilité et la durabilité de la coloration des particules d'interstratifié T.O.T.-T.O.T. gonflant $Si_4Mg_3O_{10}(OH)_2$ / $Si_4Mg_{3-\varepsilon}O_{10}(OH)_2$, $(Mg^{2+})_{\varepsilon'}$ • $nH_2O$ colorées par mise en contact avec $MnCl_2$ (échantillon 2) ont été testées dans l'eau distillée.

1 gramme de particules de l'échantillon 2 est disposé dans un bécher contenant de l'eau distillée. La solution est mélangée mécaniquement pendant 1 minute puis soumise aux ultrasons pendant 30 secondes. La solution aqueuse de particules minérales silicatées de couleur marron est laissée au repos pendant 12 heures. Après 12 heures sans agitation, les particules minérales silicatées de couleur marron forment un dépôt au fond du bécher et la solution aqueuse surnageante est limpide.

Il a ainsi été observé que la mise en solution des particules minérales silicatées colorées selon l'invention n'entraine pas une perte de la coloration de celles-ci et que la coloration obtenue est stable et durable.

L'invention peut faire l'objet de nombreuses autres applications et de diverses variantes par rapport au mode de réalisation décrit ci-dessus. En particulier, l'élément Z peut être tout autre élément chimique de formule différente de celles ci-dessus exemplifiées et permettant d'obtenir des compositions de particules minérales phyllosilicatées de couleurs différentes de celles citées ci-dessus. Plusieurs cations colorants différents peuvent également être utilisés simultanément dans une même solution colorante ou successivement.

## Revendications

**1.** Procédé de préparation d'une composition comprenant des particules minérales silicatées qui présentent des propriétés de coloration dans lequel :

- on choisit une composition, dite composition talqueuse, comprenant des particules minérales phyllosilicatées

dans le groupe formé :

- des particules formées d'un empilement de feuillets élémentaires, et ayant pour formule chimique :

$$(Si_xGe_{1-x})_4\ M_3O_{10}(OH)_2$$

- M désignant au moins un métal divalent et ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque *y(i)* représentant un nombre réel de l'intervalle [0;1], et tel que $\sum_{i=1}^{8} y(i) = 1$,
- x étant un nombre réel de l'intervalle [0 ; 1],

- des particules formées d'un empilement de feuillets élémentaires et présentant au moins un espace interfoliaire entre deux feuillets élémentaires consécutifs, et ayant pour formule chimique :

$$(Si_xGe_{1-x})_4\ M_{3-\varepsilon}\ O_{10}\ (OH)_2,\ (M'^{m+})_{\varepsilon'} \cdot nH_2O$$

- M désignant au moins un métal divalent et ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque *y(i)* représentant un nombre réel de l'intervalle [0 ; 1], et tel que $\sum_{i=1}^{8} y(i) = 1$,
- $M'^{m+}$ désignant au moins un cation, dit cation interfoliaire, présent dans au moins un espace interfoliaire desdits feuillets élémentaires,
- x étant un nombre réel de l'intervalle [0 ; 1],
- $\varepsilon$ étant un nombre réel de l'intervalle [0 ; 3[ et désignant un déficit cationique desdits feuillets élémentaires,
- $\varepsilon'$ étant un nombre réel de l'intervalle [0 ; 3[ et désignant une proportion de cation(s) interfoliaire(s) $M'^{m+}$ présent(s) dans l'(les) espace(s) interfoliaire(s) desdits feuillets élémentaires,
- m étant un nombre réel de l'intervalle [1 ; 3] et désignant une charge cationique du cation $M'^{m+}$,
- n étant relatif à un nombre de molécule(s) d'eau associée(s) auxdites particules,

lesdites particules minérales silicatées présentant une épaisseur inférieure à 100 nm et dont la plus grande dimension est inférieure à 10 µm,
- on met en contact ladite composition talqueuse avec une solution, dite solution colorante, comprenant des cations, dits cations colorants, d'au moins un élément choisi parmi les métaux de transition, les lanthanides et les actinides, de façon à obtenir une composition talqueuse comprenant des particules minérales silicatées colorées.

2. Procédé selon la revendication 1, **caractérisé en ce que** lesdites particules présentent une épaisseur comprise entre 1 nm et 100 nm, en particulier entre 5 nm et 50 nm, et dont la plus grande dimension est comprise entre 20 nm et 10 µm.

3. Procédé selon l'une des revendications 1 ou 2, **caractérisé en ce que** ladite solution colorante est une solution aqueuse.

4. Procédé selon l'une des revendications 1 à 3, **caractérisé en ce que** ladite solution colorante est une solution comprenant au moins un sel de métal choisi parmi les sels de chrome, les sels de manganèse, les sels de fer, les sels de cobalt, les sels de nickel, les sels de cuivre, les sels de zinc, les sels de cérium, les sels de néodyme, les sels de gadolinium, les sels d'holmium, et leurs mélanges.

5. Procédé selon l'une des revendications 1 à 4, **caractérisé en ce qu'**on met en contact ladite composition talqueuse avec ladite solution colorante pendant une durée comprise entre 10 minutes et 24 heures, et en particulier entre 1

heure et 2 heures.

6. Procédé selon l'une des revendications 1 à 5, **caractérisé en ce qu'**on met en contact ladite composition talqueuse avec ladite solution colorante à une température comprise entre 5°C et 100°C.

7. Procédé selon l'une des revendications 1 à 6, **caractérisé en ce qu'**on rince les particules minérales silicatées colorées obtenues à l'aide d'une solution aqueuse au moins sensiblement dénuée de cation colorant.

8. Procédé selon l'une des revendications 1 à 7, **caractérisé en ce qu'**on sèche les particules minérales silicatées colorées obtenues.

9. Procédé selon l'une des revendications 1 à 8, **caractérisé en ce qu'**on sèche la composition talqueuse comprenant des particules minérales phyllosilicatées colorées obtenues à une température comprise entre 60°C et 200°C.

10. Procédé selon l'une des revendications 1 à 9, on soumet ladite composition comprenant des particules minérales phyllosilicatées colorées obtenue à un traitement thermique à une température comprise entre 200°C et 600°C.

11. Procédé selon l'une des revendications 1 à 10, **caractérisé en ce qu'**on prépare lesdites particules minérales phyllosilicatées par un traitement hydrothermal d'une composition comprenant des particules de formule $(Si_xGe_{1-x})_4 M_3 O_{11}$, $n'H_2O$.

12. Procédé selon la revendication 11, **caractérisé en ce qu'**on réalise ledit traitement hydrothermal pendant une durée comprise entre 30 minutes et 60 jours et à une température comprise entre 150°C et 600°C.

13. Procédé selon l'une des revendications 11 ou 12, **caractérisé en ce qu'**on réalise ledit traitement hydrothermal sous pression de vapeur saturante.

14. Composition talqueuse, susceptible d'être obtenue par un procédé selon l'une des revendications 1 à 13, ladite composition talqueuse comprenant des particules minérales phyllosilicatées qui présentent des propriétés de coloration et appartiennent au groupe formé :

- des particules formées d'un empilement de feuillets élémentaires, et ayant pour formule chimique :

$$(Si_xGe_{1-x})_4 M_3O_{10}(OH)_2$$

- M désignant au moins un métal divalent et ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque $y(i)$ représentant un nombre réel de l'intervalle [0 ; 1], et tel que $\sum_{i=1}^{8} y(i) = 1$,
- x étant un nombre réel de l'intervalle [0 ; 1],

- des particules formées d'un empilement de feuillets élémentaires et présentant au moins un espace interfoliaire entre deux feuillets élémentaires consécutifs, et ayant pour formule chimique :

$$(Si_xGe_{1-x})_4 M_{3-\varepsilon} O_{10} (OH)_2, (M'^{m+})_{\varepsilon'} \bullet nH_2O$$

- M désignant au moins un métal divalent et ayant pour formule $Mg_{y(1)}Co_{y(2)}Zn_{y(3)}Cu_{y(4)}Mn_{y(5)}Fe_{y(6)}Ni_{y(7)}Cr_{y(8)}$; chaque $y(i)$ représentant un nombre réel de l'intervalle [0 ;1], et tel que $\sum_{i=1}^{8} y(i) = 1$,
- $M'^{m+}$ désignant au moins un cation, dit cation interfoliaire, présent dans au moins un espace interfoliaire desdits feuillets élémentaires,

- x étant un nombre réel de l'intervalle [0 ; 1],
- $\varepsilon$ étant un nombre réel de l'intervalle [0 ; 3[ et désignant un déficit cationique desdits feuillets élémentaires,
- $\varepsilon'$ étant un nombre réel de l'intervalle [0 ; 3[ et désignant une proportion de cation(s) interfoliaire(s) $M'^{m+}$ présente(s) dans l'(les) espace(s) interfoliaire(s) desdits feuillets élémentaires de ladite phase gonflante,
- m étant un nombre réel de l'intervalle [1 ; 3] et désignant une charge cationique du cation $M'^{m+}$,
- n étant relatif à un nombre de molécule(s) d'eau associée(s) auxdites particules,

lesdites particules minérales silicatées présentant une épaisseur inférieure à 100 nm et dont la plus grande dimension est inférieure à 10 μm.

**Patentansprüche**

1. Verfahren zur Herstellung einer Zusammensetzung, silikathaltige Mineralpartikel umfassend, die Färbungseigenschaften aufweisen, wobei:

- man eine Zusammensetzung wählt, die Talkzusammensetzung genannt wird, schichtsilikathaltige Mineralpartikel aus einer Gruppe umfassend, die sich folgendermaßen zusammensetzt:

-- aus Partikeln, die aus einer Anhäufung elementarer Plättchen gebildet werden und die folgende chemische Formel aufweist:

$$(Si_xGe_{1-x})_4M_3O_{10}(OH)_2$$

- wobei M zumindest ein zweiwertiges Metall bezeichnet und die Formel $Mg_{y(1)}Co_{y(2)}Zn_{y(3)}Cu_{y(4)}Mn_{y(5)}Fe_{y(6)}Ni_{y(7)}Cr_{y(8)}$; aufweist, wobei jedes *y(i)* eine reelle Zahl im Intervall [0; 1] darstellt, und wobei $\sum_{i=]}^{8} y(i) = 1$ ist,
- x eine reelle Zahl im Intervall [0; 1] ist,

-- aus Partikeln, die aus einer Anhäufung elementarer Plättchen gebildet werden und zumindest einen Raum zwischen den Schichten zwischen zwei aufeinander folgenden elementaren Plättchen aufweist und die folgende chemische Formel aufweist:

$$(Si_xGe_{1-x})_4M_{3-\varepsilon}O_{10}(OH)_2, (M'^{m+})_{\varepsilon'} \bullet nH_2O$$

- wobei M zumindest ein zweiwertiges Metall bezeichnet und die Formel $Mg_{y(1)}Co_{y(2)}Zn_{y(3)}Cu_{y(4)}Mn_{y(5)}Fe_{y(6)}Ni_{y(7)}Cr_{y(8)}$; aufweist, wobei jedes *y(i)* eine reelle Zahl im Intervall [0; 1] darstellt, und wobei $\sum_{i=]}^{8} y(i) = 1$ ist,
- $M'^{m+}$ zumindest ein Kation bezeichnet, das Zwischenschichtkation genannt wird, das in zumindest einem Raum zwischen den Schichten der besagten elementaren Plättchen vorhanden ist,
- x eine reelle Zahl im Intervall [0; 1] ist,
- $\varepsilon$ eine reelle Zahl im Intervall [0; 3[ ist und ein Kationendefizit der besagten elementaren Plättchen bezeichnet,
- $\varepsilon'$ eine reelle Zahl im Intervall [0; 3[ ist und eine Proportion an Zwischenschichtkation(en) $M'^{m+}$ kennzeichnet, das (die) im (in den) Raum (Räumen) zwischen den Schichten der besagten elementaren Plättchen vorhanden sind,
- m eine reelle Zahl im Intervall [1; 3] ist und eine Kationenladung des Kations $M'^{m+}$ kennzeichnet,
- sich n auf eine Zahl an Wassermolekül(en) bezieht, das (die) den besagten Partikeln zugeordnet ist (sind),

wobei die besagten silikathaltigen Mineralpartikel eine Dicke von weniger als 100 nm aufweisen und deren größte Abmessung kleiner als 10 μm ist,

- wobei man die besagte Talkzusammensetzung mit einer Lösung in Verbindung bringt, die Färbelösung genannt wird, Kationen umfassend, die Färbekationen genannt werden, mit zumindest einem Element, das aus Übergangsmetallen, den Lanthaniden und den Actiniden ausgewählt werden, um eine Talkzusammensetzung zu

erhalten, die farbige silikathaltige Mineralpartikel umfasst.

2. Verfahren nach Anspruch 1, **dadurch gekennzeichnet, dass** die besagten Partikel eine Dicke zwischen 1 nm und 100 nm, im Speziellen zwischen 5 nm und 50 nm aufweisen, und deren größte Abmessung zwischen 20 nm und 10 $\mu$m liegt.

3. Verfahren nach einem der Ansprüche 1 oder 2, **dadurch gekennzeichnet, dass** die besagte Färbelösung eine wässrige Lösung ist.

4. Verfahren nach einem der Ansprüche 1 bis 3, **dadurch gekennzeichnet, dass** die besagte Färbelösung eine Lösung ist, die zumindest ein Metallsalz umfasst, das aus den Chromsalzen, den Mangansalzen, den Eisensalzen, den Kobaltsalzen, den Nickelsalzen, den Kupfersalzen, den Zinksalzen, den Ceriumsalzen, den Neodymsalzen, den Gadoliniumsalzen, den Holmiumsalzen, und deren Mischungen ausgewählt wird.

5. Verfahren nach einem der Ansprüche 1 bis 4, **dadurch gekennzeichnet, dass** man die besagte Talkzusammensetzung für eine Dauer zwischen 10 Minuten und 24 Stunden, und im Speziellen zwischen 1 Stunde und 2 Stunden mit der besagten Färbelösung in Verbindung bringt.

6. Verfahren nach einem der Ansprüche 1 bis 5, **dadurch gekennzeichnet, dass** man die besagte Talkzusammensetzung bei einer Temperatur zwischen 5°C und 100°C mit der besagten Färbelösung in Verbindung bringt.

7. Verfahren nach einem der Ansprüche 1 bis 6, **dadurch gekennzeichnet, dass** man die erhaltenen farbigen silikathaltigen Mineralpartikel mithilfe einer wässrigen Lösung zumindest in etwa frei von Färbekationen spült.

8. Verfahren nach einem der Ansprüche 1 bis 7, **dadurch gekennzeichnet, dass** man die erhaltenen farbigen silikathaltigen Mineralpartikel trocknet.

9. Verfahren nach einem der Ansprüche 1 bis 8, **dadurch gekennzeichnet, dass** man die Talkzusammensetzung, welche die erhaltenen farbigen schichtsilikathaltige Mineralpartikel umfasst, bei einer Temperatur zwischen 60°C und 200°C trocknet.

10. Verfahren nach einem der Ansprüche 1 bis 9, wobei man die besagte Zusammensetzung, welche die erhaltenen farbigen schichtsilikathaltigen Mineralpartikel umfasst, einer thermischen Behandlung bei einer Temperatur zwischen 200°C und 600°C aussetzt.

11. Verfahren nach einem der Ansprüche 1 bis 10, **dadurch gekennzeichnet, dass** man die besagten schichtsilikathaltigen Mineralpartikel durch eine hydrothermale Behandlung einer Zusammensetzung herstellt, die Partikel der Formel $(Si_xGe_{1-x})_4M_3O_{11},n'H_2O$ umfasst.

12. Verfahren nach Anspruch 11, **dadurch gekennzeichnet, dass** man die besagte hydrothermale Behandlung für eine Dauer zwischen 30 Minuten und 60 Tagen und bei einer Temperatur zwischen 150°C und 600°C durchführt.

13. Verfahren nach einem der Ansprüche 11 oder 12, **dadurch gekennzeichnet, dass** man die besagte hydrothermale Behandlung unter Sättigungsdampfdruck durchführt.

14. Talkzusammensetzung, die man durch ein Verfahren nach einem der Ansprüche 1 bis 13 erhalten kann, wobei die besagte Talkzusammensetzung schichtsilikathaltige Mineralpartikel umfasst, die Färbeeigenschaften aufweisen und einer Gruppe angehören, die sich folgendermaßen zusammensetzt:

-- aus Partikeln, die aus einer Anhäufung elementarer Plättchen gebildet werden und die folgende chemische Formel aufweist:

$$(Si_xGe_{1-x})_4M_3O_{10}(OH)_2$$

- wobei M zumindest ein zweiwertiges Metall bezeichnet und die Formel $Mg_{y(1)}Co_{y(2)}Zn_{y(3)}Cu_{y(4)}Mn_{y(5)}Fe_{y(6)}Ni_{y(7)}Cr_{y(8)}$; aufweist, wobei jedes *y(i)* eine reelle Zahl im Intervall [0; 1]

darstellt, und wobei $\sum_{i=]}^{8} y(i) = 1$ ist,

- x eine reelle Zahl im Intervall [0; 1] ist,

-- aus Partikeln, die aus einer Anhäufung elementarer Plättchen gebildet werden und zumindest einen Raum zwischen den Schichten zwischen zwei aufeinander folgenden elementaren Plättchen aufweist und die folgende chemische Formel aufweist:

$$(Si_xGe_{1-x})_4M_{3-\varepsilon}O_{10}(OH)_2, (M'^{m+})_{\varepsilon'} \bullet nH_2O$$

- wobei M zumindest ein zweiwertiges Metall bezeichnet und die Formel $Mg_{y(1)}Co_{y(2)}Zn_{y(3)}Cu_{y(4)}Mn_{y(5)}Fe_{y(6)}Ni_{y(7)}Cr_{y(8)}$; aufweist, wobei jedes *y(i)* eine reelle Zahl im Intervall [0; 1] darstellt, und wobei $\sum_{i=]}^{8} y(i) = 1$ ist,

- $M'^{m+}$ zumindest ein Kation bezeichnet, das Zwischenschichtkation genannt wird, das in zumindest einem Raum zwischen den Schichten der besagten elementaren Plättchen vorhanden ist,
- x eine reelle Zahl im Intervall [0; 1] ist,
- $\varepsilon$ eine reelle Zahl im Intervall [0; 3 [ ist und ein Kationendefizit der besagten elementaren Plättchen bezeichnet,
- $\varepsilon'$ eine reelle Zahl im Intervall [0; 3[ ist und eine Proportion an Zwischenschichtkation (en) $M'^{m+}$ kennzeichnet, das (die) im (in den) Raum (Räumen) zwischen den Schichten der besagten elementaren Plättchen der besagten quellenden Phase vorhanden sind,
- m eine reelle Zahl im Intervall [1; 3] ist und eine Kationenladung des Kations $M'^{m+}$ kennzeichnet,
- sich n auf eine Zahl an Wassermolekül(en) bezieht, das (die) den besagten Partikeln zugeordnet ist (sind),

wobei die besagten silikathaltigen Mineralpartikel eine Dicke von weniger als 100 nm aufweisen und deren größte Abmessung kleiner als 10 $\mu$m ist.

## Claims

**1.** A method for preparing a composition comprising silicate mineral particles which have colouring properties, wherein:

- a composition, named talcose composition, comprising phyllosilicate mineral particles is chosen from the group formed of:

▪ particles formed of a stack of elementary lamellae and having the chemical formula:

$$(Si_xGe_{1-x})_4M_3O_{10}(OH)_2$$

- M denoting at least one divalent metal and having the formula $Mg_{y(1)}Co_{y(2)}Zn_{y(3)}Cu_{y(4)}Mn_{y(5)}Fe_{y(6)}Ni_{y(7)}Cr_{y(8)}$; each *y(i)* representing a real number of the interval [0; 1], and such that $\sum_{i=1}^{8} y(i) = 1$,

- x being a real number of the interval [0 ; 1],

▪ particles formed of a stack of elementary lamellae and having at least one interfoliar space between two consecutive elementary lamellae and having the chemical formula:

$$(Si_xGe_{1-x})_4 M_{3-\varepsilon} O_{10} (OH)_2, (M'^{m+})_{\varepsilon'} \bullet nH_2O$$

- M denoting at least one divalent metal and having the formula $Mg_{y(1)}Co_{y(2)}Zn_{y(3)}Cu_{y(4)}Mn_{y(5)}Fe_{y(6)}Ni_{y(7)}Cr_{y(8)}$;

each *y(i)* representing a real number of the interval [0; 1], and such that $\sum_{i=1}^{8} y(i) = 1$,

- $M'^{m+}$ denoting at least one cation, named interfoliar cation, present in at least one interfoliar space of said elementary lamellae,
- x being a real number of the interval [0 ; 1],
- $\varepsilon$ being a real number of the interval [0 ; 3[ and denoting a cation deficit of said elementary lamellae,
- $\varepsilon'$ being a real number of the interval [0 ; 3[ and denoting a proportion of interfoliar cation(s) $M'^{m+}$ present in the interfoliar space(s) of said elementary lamellae,
- m being a real number of the interval [1 ; 3] and denoting a cation charge of the cation $M'^{m+}$,
- n referring to a number of molecule(s) of water associated with said particles, said silicate mineral particles having a thickness of less than 100 nm and the largest dimension of which is less than 10 $\mu$m,
- said talcose composition is brought into contact with a solution, named colouring solution, comprising cations, named colouring cations, of at least one element chosen from the transition metals, the lanthanides and the actinides, in order to obtain a talcose composition comprising coloured silicate mineral particles.

2. The method according to claim 1, **characterised in that** said particles have a thickness of from 1 nm to 100 nm, in particular from 5 nm to 50 nm, and the largest dimension of which is from 20 nm to 10 $\mu$m.

3. The method according to claim 1 or 2, **characterised in that** said colouring solution is an aqueous solution.

4. The method according to any one of claims 1 to 3, **characterised in that** said colouring solution is a solution comprising at least one metal salt chosen from the chromium salts, manganese salts, iron salts, cobalt salts, nickel salts, copper salts, zinc salts, cerium salts, neodymium salts, gadolinium salts, holmium salts, and mixtures thereof.

5. The method according to any one of claims 1 to 4, **characterised in that** said talcose composition is contacted with said colouring solution for a duration of from 10 minutes to 24 hours, in particular from 1 hour to 2 hours.

6. The method according to any one of claims 1 to 5, **characterised in that** said talcose composition is contacted with said colouring solution at a temperature of from 5°C to 100°C.

7. The method according to any one of claims 1 to 6, **characterised in that** the coloured silicate mineral particles that are obtained are rinsed with an aqueous solution which is at least substantially free of colouring cation.

8. The method according to any one of claims 1 to 7, **characterised in that** the coloured silicate mineral particles that are obtained are dried.

9. The method according to any one of claims 1 to 8, **characterised in that** the talcose composition comprising coloured phyllosilicate mineral particles that have been obtained is dried at a temperature of from 60°C to 200°C.

10. The method according to any one of claims 1 to 9, **characterised in that** said composition comprising coloured phyllosilicate mineral particles that has been obtained is subjected to heat treatment at a temperature of from 200°C to 600°C.

11. The method according to any one of claims 1 to 10, **characterised in that** said phyllosilicate mineral particles are prepared by hydrothermal treatment of a composition comprising particles of the formula $(Si_xGe_{1-x})_4\, M_3\, O_{11}$, $n'H_2O$.

12. The method according to claim 11, **characterised in that** said hydrothermal treatment is carried out for a duration of from 30 minutes to 60 days and at a temperature of from 150°C to 600°C.

13. The method according to claim 11 or 12, **characterised in that** said hydrothermal treatment is carried out under saturation vapour pressure.

14. A talcose composition obtainable by a method according to any one of claims 1 to 13, said talcose composition comprising phyllosilicate mineral particles which have colouring properties and belong to the group formed of:

- particles formed of a stack of elementary lamellae and having the chemical formula:

$(Si_xGe_{1-x})_4M_3O_{10}(OH)_2$

- M denoting at least one divalent metal and having the formula $Mg_{y(1)}Co_{y(2)}Zn_{y(3)}Cu_{y(4)}Mn_{y(5)}Fe_{y(6)}Ni_{y(7)}Cr_{y(8)}$; each *y(i)* representing a real number of the interval [0; 1], and such that $\sum_{i=1}^{8} y(i) = 1$,
- x being a real number of the interval [0 ; 1],

▪ particles formed of a stack of elementary lamellae and having at least one interfoliar space between two consecutive elementary lamellae and having the chemical formula:

$(Si_xGe_{1-x})_4 M_{3-\varepsilon} O_{10} (OH)_2, (M'^{m+})_{\varepsilon'} \bullet nH_2O$

- M denoting at least one divalent metal and having the formula $Mg_{y(1)}Co_{y(2)}Zn_{y(3)}Cu_{y(4)}Mn_{y(5)}Fe_{y(6)}Ni_{y(7)}Cr_{y(8)}$; each *y(i)* representing a real number of the interval [0; 1], and such that $\sum_{i=1}^{8} y(i) = 1$,
- $M'^{m+}$ denoting at least one cation, named interfoliar cation, present in at least one interfoliar space of said elementary lamellae,
- x being a real number of the interval [0 ; 1],
- $\varepsilon$ being a real number of the interval [0 ; 3[ and denoting a cation deficit of said elementary lamellae,
- $\varepsilon'$ being a real number of the interval [0 ; 3[ and denoting a proportion of interfoliar cation(s) $M'^{m+}$ present in the interfoliar space(s) of said elementary lamellae of the swelling phase,
- m being a real number of the interval [1 ; 3] and denoting a cation charge of the cation $M'^{m+}$,
- n referring to a number of molecule(s) of water associated with said particles,

said silicate mineral particles having a thickness of less than 100 nm and the largest dimension of which is less than 10 $\mu$m.

Figure unique

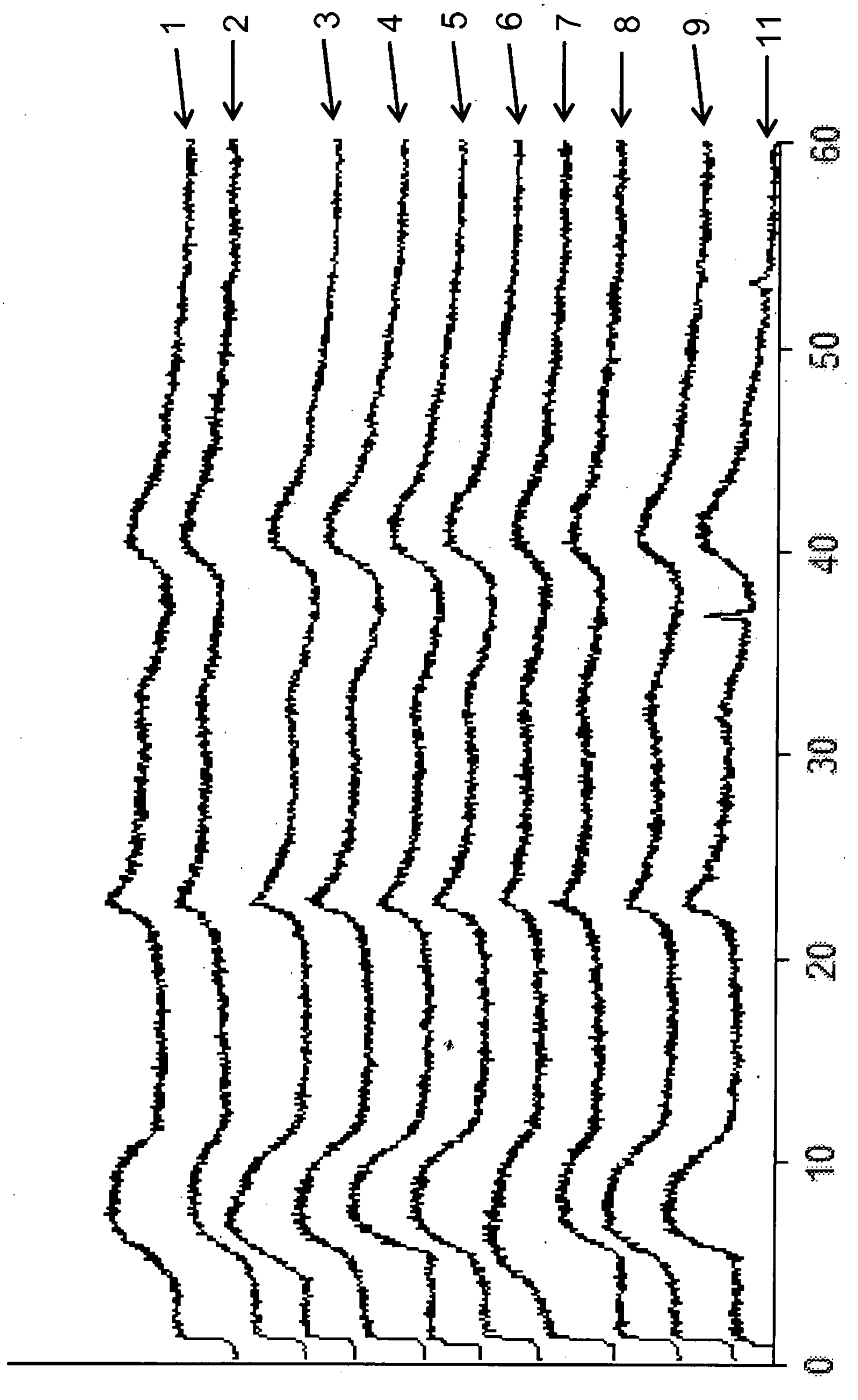

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2008009800 A
- WO 0063299 A


### Littérature non-brevet citée dans la description


- **ROSS M. ; SMITH W.L. ; ASHTON W.H.** *Triclinic talc and associated amphiboles from Gouverneur mining district, New York ; American Mineralogist,* 1968, vol. 53, 751-769